(19) Europäisches Patentamt
European Patent Office
Office européen des brevets

(11) **EP 1 344 790 B1**

(12) **EUROPÄISCHE PATENTSCHRIFT**

(45) Veröffentlichungstag und Bekanntmachung des Hinweises auf die Patenterteilung:
**30.07.2008  Patentblatt 2008/31**

(51) Int Cl.:
*C08J 5/18* (2006.01)          *C08K 5/00* (2006.01)
*C08K 5/13* (2006.01)          *C08L 67/02* (2006.01)

(21) Anmeldenummer: **03004863.1**

(22) Anmeldetag: **06.03.2003**

(54) **Biaxial orientierte Folie mit verbesserter Oberflächenqualität auf Basis von kristallisierbaren Polyestern und Verfahren zur Herstellung der Folie**

Biaxially oriented film with better surface quality based on crystallizable polyesters, and process for producing the film

Film orienté biaxialement avec la qualité de la surface améliorée à base de polyesters cristallisables et procédé de fabrication de le film

(84) Benannte Vertragsstaaten:
**DE FR GB LU**

(30) Priorität: **11.03.2002   DE 10210502**

(43) Veröffentlichungstag der Anmeldung:
**17.09.2003   Patentblatt 2003/38**

(73) Patentinhaber: **Mitsubishi Polyester Film GmbH**
**65203 Wiesbaden (DE)**

(72) Erfinder:
• **Murschall, Ursula, Dr.**
**55283 Nierstein (DE)**
• **Kern, Ulrich, Dr.**
**55218 Ingelheim (DE)**
• **Kurz, Rainer, Dr.**
**65307 Bad Schwalbach (DE)**
• **Kliesch, Holger, Dr.**
**55252 Mainz-Kastel (DE)**
• **Kuhmann, Bodo**
**D-65594 Runkel (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 620 245          US-A- 4 011 196**

## Beschreibung

Die Erfindung betrifft eine ein- oder mehrschichtige, biaxial orientierte Folie auf Basis von kristallisierbaren Polyestern, die mindestens einen primären Stabilisator zur Verhinderung des oxidativen Abbaus enthält. Sie betrifft daneben ein Verfahren zur Herstellung der Folie.

Folien auf Basis von kristallisierbaren Polyestern, insbesondere von kristallisierbaren Polyethylenterephthalaten, sind bekannt. Beschrieben sind auch Polypropylenfolien, die Zusätze zur Vermeidung des oxidativen Abbaus enthalten.

So ist in der EP-B 620 245 eine biaxial orientierte Polyesterfolie offenbart, die als Antioxidans ein sterisch gehinderter Phenol enthält, beispielsweise ®Irganox 1010 (= Tetrakis-[methylen-3-(4-hydroxy-3,5-di-tert.-butylphenyl)-proprionat]-methan). Es wird vorzugsweise vermischt mit den monomeren Ausgangsmaterialien, die den Polyester bilden. Das geschieht allgemein zum Ende der direkten Veresterung oder der Esteraustauschreaktion und vor der Polykondensation. Durch Massepolymerisation (Festphasenpolymerisation) wird das durchschnittliche Molekulargewicht weiter erhöht. Die intrinsische Viskosität (IV) des Polyesters in der Folie, d.h. nach der Extrusion, liegt bei 0,65 bis 0,8. Die intrinsische Viskosität des in der Folienproduktion eingesetzten Polyesters muß entsprechend höher liegen. Es hat sich als schwierig erwiesen, aus einem solch hochviskosen Polyester eine Folie mit einer gleichmäßig hohen Qualität herzustellen.

Eine elektrisch isolierende Polyesterfolie mit Polyethylenterephthalat als Hauptbestandteil sowie einem Radikalfänger und einem Reduktionsmittel ist in der koreanischen Offenlegungsschrift KR 2001-47779 beschrieben. Der Radikalfänger ist vorzugsweise ein sterisch gehindertes Phenol oder ein sekundäres aromatisches Amin. Konkret genannt ist Tetrakis-[methylen-(3,4-di-tert.-butyl-4-hydroxyphenyl)-propionat]-methan. Gemäß Beispiel 1 der Offenlegungsschrift wird das sterisch gehinderte Phenol nach der Umesterungsstufe und vor der Polykondensationsstufe zugegeben. Das Reduktionsmittel ist allgemein eine Phosphorverbindung, insbesondere ein Triarylphosphit oder Spiropentaerythrit-diphosphit.

Die Oberflächenqualität dieser bekannten Polyesterfolien ist jedoch für manche Anwendungen nicht ausreichend. So müssen Trägerfolien für Magnetbänder eine besonders gleichmäßige Struktur aufweisen. Auch für Kondensatorfolien, Thermotransferfolien, Verpackungsfolien und Folien für industrielle Anwendungen sind Ungleichmäßigkeiten in der Folienstruktur sehr nachteilig. Die in der Regel durch Gelpartikel bewirkten Oberflächendefekte stören zudem das optische Erscheinungsbild und beeinträchtigen Weiterverarbeitungsprozesse, wie Metallisierung oder Bedruckung.

Polyesterfolien werden allgemein aus einem Kunststoffgranulat hergestellt, das in einem Extruder aufgeschmolzen wird. Über eine Breitschlitzdüse wird die dabei erzeugte Kunststoffschmelze zu einer sogenannten Vorfolie geformt. Die Vorfolie wird dann an einer Abzugs- und Kühlwalze angelegt, anschließend in Längs- und Querrichtung verstreckt und schließlich aufgerollt. Die Folienrollen sollen dabei keine Längsrillen, Falten, Verläufe oder sonstigen Defekte aufweisen, die das Aussehen oder die weitere Verarbeitung beeinträchtigen. Längsrillen in der Folie lassen sich in der Regel auf ein unzureichendes Querprofil zurückführen. Das Querprofil wird auch durch Ablagerungen an der Extrusionsdüse negativ beeinflußt. Die Düsenablagerungen wiederum entstehen meist aus Bestandteilen der Kunststoffschmelze.

Es bestand daher die Aufgabe, die Zahl der Oberflächendefekte in der Polyesterfolie zu vermindern. Insbesondere soll die Folie weniger Stippen und durch Gelpartikel verursachte Defekte aufweisen. Außerdem soll die Folie keine Längsrillen oder sonstige Fehler aufweisen, die den Rollenaufbau beeinträchtigen. Darüber hinaus soll die Prozeßstabilität gesteigert werden, d.h. es sollen keine Folienabrisse oder ähnliche Störungen auftreten. Die Filterstandszeit soll verlängert sein, die Trocknungszeiten verkürzt, Folienregenerat soll auch in größeren Anteilen wieder einsetzbar sein. Weiterhin sollen der Durchsatz und die Produktionsgeschwindigkeit optimiert werden.

Gelöst wird die Aufgabe, wenn der Stabilisator bereits vor der Polykondensation zugegeben und auf diese Weise in den Polyester eingebaut wird.

Gegenstand der vorliegenden Erfindung ist demgemäß eine ein- oder mehrschichtige, biaxial orientierte Folie auf Basis eines kristallisierbaren Polyesters, die mindestens einen primären Stabilisator zur Verhinderung des oxidativen Abbaus enthält, dadurch gekennzeichnet, daß der kristallisierbaren Polyester 100 bis 10.000 ppm an primärem Stabilisator in kovalent gebundener Form enthält, wobei der Stabilisator mindestens 2 zur Polykondensation bei der Polyesterbildung befähigte Gruppen aufweist. Bevorzugt beträgt der Anteil des kovalent gebundenen Stabilisators 150 bis 9.000 ppm, besonders bevorzugt 200 bis 8.000 ppm.

Vorzugsweise ist der primäre Stabilisator Bestandteil der Polymerhauptkette des Polyesters. Er enthält demgemäß mindestens zwei zur Polykondensation bei der Polyesterbildung befähigte Gruppen, vorzugsweise Carboxyund/oder Estergruppen, besonders bevorzugt Estergrupppen. Besonders bevorzugte primäre Stabilisatoren sind phenolische Verbindungen, insbesondere sterisch gehinderte Phenole, die über zusätzliche Ester- und/oder Carboxygruppen verfügen, die zur Teilnahme an der Polykondensationsreaktion befähigt sind. Solche sterisch gehinderten Phenole sind unter der Bezeichnung Irganox von Ciba Specialty Chemicals erhältlich. Geeignet sind daneben Thio-bis-phenole, Alkyliden-bis-phenole, Alkylphenole, Hydroxybenzylverbindungen, Acyl-amino-phenole und Hydroxyphenylpropionate.

Weiterhin sind aromatische Verbindungen mit 2 oder mehr sekundären Aminogruppen geeignet. Die primären Stabilisatoren sind beispielsweise beschrieben in der Monographie von Gächter und Müller "Kunststoffadditive", 2. Auflage, Carl Hanser Verlag und in der Monographie von Dr. Hans Zweifel, "Plastics Additive Handbook", 5. Auflage, Carl Hanser Verlag. Primäre Stabilisatoren der oben genannten Art sind seit langem bekannt, auch als Additive für Polyester. Sie wurden jedoch stets nach der Polykondensation zugemischt und waren demgemäß kein integraler Bestandteil des Polyesters, d.h. sie waren nicht kovalent gebunden im Polyester.

Diese primären Stabilisatoren sind gegebenenfalls kombiniert mit sekundären Stabilisatoren, die die Wirkung der primären unterstützen oder auch verstärken. Als sekundäre Stabilisatoren geeignet sind insbesondere Thioether sowie Zink-dibutyl-dithiocarbamat. Der sekundäre Stabilisator wird allgemein als Additiv zugesetzt, ist also kein integraler Bestandteil des Polyesters. Sein Anteil beträgt allgemein 0,01 bis 1,0 Gew.-%, bevorzugt 0,05 bis 0,5 Gew.-%, jeweils bezogen auf das Gewicht der Folie.

Der Polyester mit dem kovalent eingebundenen primären Stabilisator (im folgenden bezeichnet als »modifizierter Polyester") hat allgemein eine SV-Wert im Bereich von 450 bis 850, bevorzugt 700 bis 830.

Wird der Polyester nach dem Dimethylterepthalat(DMT)-Verfahren hergestellt, so wird der primäre Stabilisator zweckmäßig bereits vor oder nach der Umesterung, direkt vor der Polykondensation in Form einer Lösung oder Dispersion in Glykol zugegeben. Der spezifische Schmelzewiderstand des auf diese Weise erhaltenen modifizierten Polyesters liegt im Bereich von $1 \cdot 10^7$ bis $120 \cdot 10^7$ Ohm cm und ist damit nicht signifikant verschieden von einem nicht-modifizierten Polyester. Gegebenenfalls kann der spezifische Schmelzewiderstand durch Zugabe von ionischen Additiven auf den gewünschten Wert eingestellt werden.

Der modifizierte, kristallisierbare Polyester enthält neben Einheiten aus Ethylenglykol und Terephthalsäure gegebenenfalls noch Einheiten aus Isophthalsäure, Naphthalin-2,6-dicarbonsäure und/oder Biphenyldicarbonsäure (= Bibenzoesäure) und/oder Einheiten aus aliphatischen oder cycloaliphatischen Diolen mit 2 bis 8 Kohlenstoffatomen, insbesondere aus Propylenglykol, Butylenglykol und/oder Cyclohexandimethanol. Es handelt sich demgemäß bevorzugt um modifizierte Polyethylenterephthalate, Polybutylenterephthalate, Poly(1,4-cyclohexandimethylenterephthalat), Polyethylennaphthalin-2,6-dicarboxylat, Polyethylennaphthalin-1,5-dicarboxylat oder Polyethylennaphthalat/Bibenzoat. Modifiziertes Polyethylenterephthalat (PET) und modifiziertes Polyethylennaphthalat (PEN) sowie Gemische davon sind bevorzugt.

Unter der Bezeichnung modifizierte, kristallisierbare Polyethylenterephthalate oder Polyethylennaphthalate sollen dabei kristallisierbare Homopolymere, kristallisierbare Compounds, kristallisierbare Copolymere, kristallisierbare Recyclate und andere Variationen verstanden werden.

Die Polyester können aus Dimethylterephthalat nach dem Umesterungsverfahren (DMT-Verfahren) hergestellt werden, wobei sich als Umesterungskatalysatoren Zink-, Magnesium-, Calcium-, Mangan-, Lithium- oder Germaniumsalze eignen. Sie können auch durch Direktveresterung hergestellt werden (PTA-Verfahren). Dabei können verschiedene Polykondensationskatalysatoren eingesetzt werden, insbesondere Antimon-, Germanium- oder Titanverbindungen. Phosphorverbindungen werden als Stabilisatoren eingesetzt. Sie haben allgemein keine reduzierenden Eigenschaften. Phosphorhaltige Reduktionsmittel sind in der erfindungsgemäßen Folie vorzugsweise nicht enthalten.

Durch den kovalent gebundenen primären Stabilisator wird die thermische Schädigung des Polymers bei der Polykondensationsreaktion reduziert. Dies gilt sowohl für das DMT- als auch für das PTA-Verfahren und ist von besonderer Bedeutung bei der Herstellung von Polyestern, die z.B. mit Pigmenten oder Partikeln (insbesondere Siliciumdioxid) gefüllt sind. Die Pigmente oder Partikel werden dabei in gleicher Weise vor der Polykondensation zugegeben.

Bis zu 50 mol-%, bevorzugt bis zu 30 mol-%, der Polymereinheiten in dem Polyester können ersetzt sein durch Einheiten aus Comonomeren. Dabei kann die Dicarbonsäurekomponente, die Glykolkomponente oder beide teilweise ersetzt sein. Als Säurekomponente können die Polyester beispielsweise Adipinsäure, Glutarsäure, Bernsteinsäure, Sebacinsäure, 5-Na-sulfo-isophthalsäure oder auch polyfunktionelle Säuren, wie Trimellithsäure enthalten.

Die erfindungsgemäße biaxial orientierte Folie hat allgemein eine Dicke von 0,5 bis 500 $\mu$m, bevorzugt von 1 bis 350 $\mu$m, besonders bevorzugt 2 bis 190 $\mu$m.

Bei Verwendung der modifizierten Polyester gemäß der vorliegenden Erfindung treten überraschenderweise praktisch keine Düsenablagerungen mehr auf, so daß das Profil und die Rollenaufmachung der damit hergestellten Folie deutlich besser ist als bei Folien aus Standardrohstoffen (das sind Polyester ohne einkondensierte Stabilisatoren). Selbst nach zweitägiger Produktion konnten keinerlei Ablagerungen festgestellt werden. Das Profil der Folie kann daher über einen sehr langen Zeitraum exakt konstant gehalten werden, was zu einer sehr guten Rollenaufmachung führt. Die Anzahl der Gele und Stippen ist im Vergleich zu einer Folie aus nicht modifiziertem Polyester dramatisch niedriger, so daß die Oberflächenqualität extrem verbessert ist. Selbst bei höheren Geschwindigkeiten kommt es praktisch nicht mehr zu Folienabrissen. Bei zweitägiger Produktion einer Dünnstfolie mit einer Dicke von 4,5 $\mu$m, die bei hoher Produktionsgeschwindigkeit (mehr als 280 m/min) hergestellt wurde, trat kein einziger Abriß auf.

Weiterhin war überraschend, daß die Polymerfilter eine längere Standzeit hatten. Je nach Folientyp waren die Standzeiten deutlich verlängert, teilweise verdoppelt. Die Wirtschaftlichkeit der Folienherstellung ist daher deutlich verbessert. Überraschend war auch, daß sich das bei der Folienherstellung immanent anfallende Regenerat problemlos auch in einer großen Menge (bis zu 60 Gew.-%) wieder einsetzen ließ, ohne die Eigenschaften der Folie negativ zu beeinflussen.

Insbesondere überraschend waren die gegenüber Standard-Polymeren bis zu 30 % reduzierten Trocknungszeiten für den Thermoplasten bzw. die Mischung aus Thermoplast und Regenerat.

Die erfindungsgemäße Polyesterfolie kann auch einen mehrschichtigen Aufbau haben. Sie besteht dann allgemein aus mindestens einer Kern- oder Basisschicht und mindestens einer Deckschicht. Dreischichtige Folien mit einem A - B - A - oder A - B - C - Aufbau (B = Kernschicht, A und C = Deckschichten) sind bevorzugt. Die Kernschicht besteht bevorzugt aus dem mit dem Stabilisator modifizierten Polyethylenterephthalat-Homopolymeren (als modifizierte PET-Homopolymere werden dabei solche bezeichnet, die neben den Ethylenglykol-, den Terephthalat-Einheiten und den Einheiten aus dem Stabilisator keine Einheiten aus anderen Monomeren enthalten). Die Deckschichten können aus modifizierten oder unmodifizierten PET- oder PEN-Homopolymeren, aus modifizierten oder unmodifizierten Poly (ethylenterephthalat/ethylennaphthalat) oder entsprechenden Compounds bestehen.

Kern- oder Basisschicht und/oder Deckschicht(en) können zusätzlich weitere übliche Additive enthalten, wie Antiblockmittel, lösliche Farbstoffe, Weiß- und/oder Farbpigmente. Die Additive werden zweckmäßig dem Polymer bzw. der Polymermischung bereits vor dem Ausschmelzen zugesetzt.

Als Additive können auch Mischungen von zwei oder mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den übliche Konzentrationen beispielsweise in Form einer glykolischen Suspension bereits während der Polykondensation oder später unmittelbar vor der Extrusion in Form eines oder mehrerer Masterbatche zugegeben werden. Als besonders geeignet haben sich Additivkonzentrationen im Bereich von 0,0001 bis 20,0 Gew.-%, bezogen auf das Gewicht der damit ausgerüsteten Schicht(en), erwiesen.

Die mehrschichten Folien können demgemäß einen symmetrischen oder unsymmetrischen Aufbau haben. Kern- und/oder Deckschichten können mit zusätzlichen Additiven ausgestattet sein oder aus verschiedenartigen Polyestern (z.B. mit verschiedenem Molekulargewicht oder verschiedener Viskosität) bestehen. Die mehrschichtigen Folien lassen sich besonders einfach durch Coextrusion herstellen.

Bei der Folienherstellung kann zum einen ein Vollrohstoff eingesetzt werden, dem bereits alle Additive vor der Polykondensation zugesetzt wurden. Zum anderen können sämtliche oder einzelne Additive auch während der Folienproduktion zugeführt werden, vorzugsweise mit Hilfe der Masterbatch-Technologie. Dabei werden verschiedene Rohstoffkomponenten, die jeweils unterschiedliche Additive enthalten, vor der Extrusion gemischt. Der modifizierte Polyester kann dabei den Klarrohstoff bilden oder zumindest ein wesentlicher Bestandteil des Klarrohstoffes davon, dem dann die Masterbatche mit den verschiedenen Additiven hinzugefügt werden. Der modifizierte Polyester kann auch allein oder zusätzlich über die Masterbatche eingeführt werden.

Die Rohstoffkomponenten wie auch die gegebenenfalls eingesetzten Masterbatche sollten vorkristallisiert bzw. vorgetrocknet sein. Die Vortrocknung beinhaltet zweckmäßigerweise ein graduelles Erhitzen unter reduziertem Druck (20 bis 80 mbar, vorzugsweise 30 bis 60 mbar, insbesondere 40 bis 50 mbar) sowie Rühren und gegebenenfalls ein Nachtrocknen bei konstanter, erhöhter Temperatur (ebenfalls unter reduziertem Druck). Es ist zweckmäßig, die Rohstoffkomponenten zusammen mit den Polymeren der Basis- und/oder Deckschichten und gegebenenfalls weiterer Komponenten bei Raumtemperatur, bevorzugt chargenweise, in einen Vakuumtrockner zu füllen. Im Laufe der Trocken- bzw. Verweilzeit wird ein Temperaturspektrum von 10 bis 160˚C, vorzugsweise 20 bis 150˚C, insbesondere 30 bis 130˚C durchlaufen. Während der etwa 6-stündigen, vorzugsweise 5-stündigen, insbesondere 4-stündigen, Verweilzeit wird die Rohstoffmischung mit 10 bis 70 Upm, vorzugsweise 15 bis 65 Upm, insbesondere 20 bis 60 Upm, gerührt. Das so vorkristallisierte bzw. vorgetrocknete Rohstoffgemisch wird in einem nachgeschalteten ebenfalls evakuierten Behälter bei 90 bis 180 ˚C, vorzugsweise 100 bis 170˚C, insbesondere 110 bis 160 ˚C, für 2 bis 8 Stunden, vorzugsweise 3 bis 7 Stunden, insbesondere 4 bis 6 Stunden, nachgetrocknet.

Bei dem bevorzugtem Extrusionsverfahren zur Herstellung der Folie wird das aufgeschmolzene Polyestermaterial durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung verstreckt („orientiert"). Die Strecktemperaturen liegen im allgemeinen bei 10 bis 60 ˚C über der Glas-Übergangstemperatur $T_g$ der Folie, das Streckverhältnis der Längsstrekkung liegt üblicherweise bei 2 bis 6, insbesondere bei 3 bis 4,5, das der Querstreckung bei 2 bis 5, insbesondere bei 3 bis 4,5, und das der gegebenenfalls durchgeführten zweiten Längs- und Querstreckung bei 1,1 bis 3. Die erste Längsstreckung kann auch gleichzeitig mit der Querstreckung (Simultanstreckung) durchgeführt werden. Es folgt die Thermofixierung der Folie bei Ofentemperaturen von 150 bis 250 ˚C, insbesondere von 170 bis 240 ˚C. Anschließend wird die Folie abgekühlt und aufgewickelt.

Durch die Kombination ihrer ausgezeichneten Eigenschaften eignet sich die erfindungsgemäße Folie für eine Vielzahl verschiedener Anwendungen, besonders im industriellen Bereich, im Elektronikbereich, für Thermotransfer, als Verpackungsmaterial, als Magnetband-, Präge-, Trenn- oder Deckelfolien, als Kondensatorfolie, als Isoliermaterial, zum Kaschieren und Laminieren, um nur einiges zu nennen. Mit besonderem Vorteil läßt die Folie sich überall dort einsetzen, wo es auf eine besonders gleichmäßige und hohe Qualität ankommt.

In den nachfolgenden Ausführungsbeispielen erfolgt die Messung der einzelnen Eigenschaften gemäß den folgenden Normen bzw. Verfahren.

**Mittlere Dicke**

Die mittlere Dicke $d_F$ wird bei bekannter Länge, Breite und Dichte einer Folie aus deren Gewicht bestimmt. Gemessen wird das Gewicht eines auf dem Zuschneidetisch vorbereiteten Folienstreifens, der aus der Mitte eines über die ganze Rollenbreite gehenden Musters genommen wird. Die Berechnung von $d_F$ erfolgt nach der Formel

$$d_F = \frac{m[g]}{l[mm] \cdot b[mm] \cdot d[g/cm^3]} \cdot 10^{-6}$$

wobei gilt: m = Masse des untersuchten Folienstückes

l = Länge der Probe

b = Breite der Probe

d = Dichte des untersuchten Materials (für Polyester 1,395 $g/cm^3$)

Die einzelnen Probestreifen werden nach dem Zuschneiden auf einer Analysenwaage Mettler PM 200 (Höchstlast 200 g) verwogen. Ein daran angeschlossener Computer vom Typ HP Vectra ES/12 übernimmt nach der Eingabe von Maschine und Rollennummer alle Parameter aus dem OPUS-Programm und errechnet damit die mittlere Dicke.

**Standardviskosität (SV) und intrinsische Viskosität (IV):**

Die Standardviskosität SV wurde - angelehnt an DIN 53726 - als 1%ige Lösung in Dichloressigsäure (DCE) bei 25°C gemessen. SV (DCE) = ($\eta_{rel}$ -1) x 1000. Die intrinsische Viskosität (IV) berechnet sich wie folgt aus der Standardviskosität (SV)

$$IV = [\eta] = 6,907 \cdot 10^{-4} \, SV \, (DCE) + 0,063096 \, [dl/g]$$

**Oberflächendefekte**

Oberflächendefekte (Gele und Stippen) werden visuell bestimmt.

**Rollenaufmachung**

Die Rollenaufmachung wird nach den Kriterien »Längsrillen", »Falten" und »Verlauf" visuell beurteilt.

**Abrisse**

Die Anzahl der Folienabrisse pro Zeiteinheit wird mit denen bei konventionellem Polymer verglichen und die prozentuale Abweichung festgestellt.

**Düsenablagerungen**

Die Düsenablagerungen werden visuell bestimmt.

**Folienprofil**

Das Profil der Folie wird kapazitiv mit Hilfe des elektronischen Dickenmeßgerätes ML 210-12-1 der Firma Eichhorn-Hausmann bestimmt. Dazu wird ein 70 mm breiter Streifen in Querrichtung über die gesamte Folienbreite ausgeschnitten und auf eine Aluminiumwalze aufgewickelt. Die Folie wird mit einer Abrolleinrichtung abgerollt und dabei zwischen 2 Kondensatorplatten durchgeführt. Die eingestellte Dielektrizitätskonstante beträgt 3,30.

Die durch die Dickenunterschiede der Folien hervorgerufenen elektrischen Spannungsunterschiede werden mit Hilfe geeigneter Software in ein Dickenprofil umgewandelt.

Der Wert ΔE gibt den Unterschied zwischen maximaler und minimaler Dicke über die gesamte Folienbreite an.

**Filterstandzeit**

Der Wechsel von Filtern kann zum einen durch Erreichen der Druckgrenze erforderlich werden, zum andern durch die Bildung von Stippen oder Gelen. Nach einer bestimmten Anzahl von Tagen wird die Filterstandzeit mit der bei konventionellem Polymer verglichen und die prozentuale Abweichung festgestellt.

In den folgenden Beispielen wird die Erfindung näher erläutert, ohne sie in irgendeiner Weise zu beschränken. Prozente sind darin Gewichtsprozente, soweit nicht anders angegeben oder aus dem Zusammenhang ersichtlich.

Beispiel 1

Polyethylenterephthalat (KoSa, Deutschland), das 1000 ppm ®Irganox 1010 (Ciba Specialties, Schweiz) als integralen Bestandteil der Polymerkette enthielt (Polymer 1), mit einem SV-Wert von 810, wurde bei 160˚C auf eine Restfeuchte von 50 ppm getrocknet und einem Extruder zugeführt. Polymer 1 war nach dem DMT-Verfahren hergestellt, wobei dem Reaktionsansatz nach erfolgter Umesterung und vor der Polykondensation eine Suspension von Irganox 1010 in Ethylenglykol zugesetzt wurde. In einem Hexafluoroisopropanol/Methylenchlorid-Extrakt des resultierenden Polyesters konnte durch $^1$H-NMR- oder IR-Spektroskopie (Nachweisgrenze jeweils 10 ppm) oder durch HPLC (Nachweisgrenze 3 ppm) kein freies Irganox nachgewiesen werden. Es war demnach vollständig kovalent gebunden. Die Folie enthielt weiterhin 30 % arteigenes Regenerat.

Die Extrusion der Folie erfolgte bei der Temperatur von 285 ˚C. Anschließend wurde die Folie stufenweise in Längs- und Querrichtung verstreckt, jeweils in einem Streckverhältnis von 3,8. Die Temperatur betrug bei der Längsverstreckung 118 ˚C, bei der Querverstreckung 120 ˚C. Bei 230 ˚C wurde die Folie dann thermofixiert. Erhalten wurde auf diese Weise eine einschichtige, 50 μm dicke, glasklare Folie. Die Folie wurde 7 Tage lang bei einer Geschwindigkeit von 110 m/min produziert.

Beispiel 2

Es wurde eine 4,5 μm dicke Folie mit folgender Zusammensetzung hergestellt:

| | |
|---|---|
| 60 % | Polymer 1 aus Beispiel 1, |
| 10 % | Masterbatch, das 5.000 ppm in die Polymerkette einkondensiertes ®Irganox 1010 und 20.000 ppm ®Sylobloc 44H (Grace, Deutschland) als Additiv enthielt, und |
| 30 % | des bei der Produktion immanent anfallenden Regenerats |

Die Produktionsgeschwindigkeit betrug 280 m/min, die Produktionsdauer 14 Tage.

Beispiel 3

Es wurde ein 12 μm dicke Folie aus einem Polymer hergestellt, das neben Polyethylenterephthalat 1.000 ppm in die Polymerkette einkondensiertes ®Irganox 1010 und 1.500 ppm ®Sylobloc 44H als Additiv enthielt. Der Anteil an arteigenem Regenerat betrug 40 %. Die Produktionsgeschwindigkeit betrug 340 m/min, die Produktionsdauer 12 Tage.

Vergleichsbeispiel V1

Beispiel 2 wurde wiederholt. Die eingesetzten Polymere enthielten jedoch kein ®Irganox 1010.

Vergleichsbeispiel V2

Beispiel 2 wurde wiederholt. ®Irganox 1010 wurde jedoch nicht in die Polymerkette einkondensiert, sondern nach der Polykondensation zugegeben und fungierte lediglich als Additiv.

Die nachfolgende Tabelle zeigt das Eigenschaftsprofil der gemäß den Beispielen und Vergleichsbeispielen hergestellten Folien:

| Eigenschaften | | Beispiele | | | | |
|---|---|---|---|---|---|---|
| | | 1 | 2 | 3 | V1 | V2 |
| mittlere Dicke | μm | 50 | 4,5 | 12 | 4,5 | 4,5 |
| Profil ΔE | μm | 0,5 | 0,4 | 0,4 | 0,7 | 0,6 |
| Oberflächen-defekte)[1] | | 6 | 12 | 8 | 30 | 25 |
| Rollenaufmachung | | gut | gut | gut | Längsrillen, Falten | Längsrillen, Falten |
| Abrisse)[2] | % | 30 | 60 | 45 | 0 | 10 |
| Filterstandzeit)[2] | % | 40 | 100 | 80 | 0 | 10 |
| Düsenablage-rungen | | keine beob- | keine beob- | keine beob- | deutlich sichtbar | deutlich sichtbar |

)[1] = Anzahl der Defekte pro 5 m$^2$
)[2] = Verbesserung in % gegenüber „Standard"

**Patentansprüche**

1. Ein- oder mehrschichtige, biaxial orientierte Folie auf Basis eines kristallisierbaren Polyesters, die mindestens einen primären Stabilisator zur Verhinderung des oxidativen Abbaus enthält, **dadurch gekennzeichnet, daß** der kristallisierbare Polyester eine Standardviskosität (SV) im Bereich von 450 bis 830 zeigt und 100 bis 10.000 ppm an primärem Stabilisator in kovalent gebundener Form enthält, wobei der Stabilisator mindestens 2 zur Polykondensation bei der Polyesterbildung befähigte Gruppen aufweist.

2. Folie gemäß Anspruch 1, **dadurch gekennzeichnet, daß** der Anteil des kovalent gebundenen Stabilisators 150 bis 9.000 ppm, beträgt.

3. Folie gemäß Anspruch 1 oder 2, **dadurch gekennzeichnet, daß** der primäre Stabilisator Bestandteil der Polymerhauptkette des Polyesters ist.

4. Folie gemäß Anspruch 1 3, **dadurch gekennzeichnet, daß** der primäre Stabilisator mindestens zwei zur Polykondensation bei der Polyesterbildung befähigte Carboxy- und/oder Estergruppen, aufweist.

5. Folie gemäß einem oder mehreren der Ansprüche 1 bis 4, **dadurch gekennzeichnet, daß** der primäre Stabilisator ein sterisch gehindertes Phenol, ein Thio-bis-phenol, Alkyliden-bis-phenol, ein Acyl-amino-phenol oder eine aromatische Verbindungen mit 2 oder mehr sekundären Aminogruppen ist.

6. Folie gemäß einem oder mehreren der Ansprüche 1 bis 5, **dadurch gekennzeichnet, daß** sie zusätzlich einen sekundären Stabilisator enthält.

7. Folie gemäß Anspruch 6, **dadurch gekennzeichnet, daß** der sekundäre Stabilisator ein Thioether oder Zink-dibutyl-dithiocarbamat ist.

8. Folie gemäß Anspruch 6 oder 7, **dadurch gekennzeichnet, daß** der Anteil des sekundären Stabilisators 0,01 bis 1,0 Gew.-%, beträgt, bezogen auf das Gewicht der Folie.

9. Folie gemäß einem oder mehreren der Ansprüche 1 bis 8, **dadurch gekennzeichnet, daß** der Polyester mit dem kovalent eingebundenen primären Stabilisator einen SV-Wert von 450 bis 850 aufweist.

10. Folie gemäß einem oder mehreren der Ansprüche 1 bis 9, **dadurch gekennzeichnet, daß** der spezifische Schmelzewiderstand des Polyesters mit dem kovalent eingebundenen primären Stabilisator im Bereich von $1 \cdot 10^7$ bis $120 \cdot 10^7$ Ohm · cm liegt.

**11.** Folie gemäß einem oder mehreren der Ansprüche 1 bis 10, **dadurch gekennzeichnet, daß** der Polyester mit dem kovalent eingebundenen primären Stabilisator ein modifiziertes Polyethylenterephthalat, Polybutylenterephthalat, Poly(1,4-cyclohexandimethylenterephthalat), Polyethylennaphthalin-2,6-dicarboxylat, Polyethylennaphthalin-1,5-dicarboxylat, Polyethylennaphthalat/Bibenzoat oder Poly(ethylen-*para*-hydroxy-benzoat) ist.

**12.** Folie gemäß einem oder mehreren der Ansprüche 1 bis 11, **dadurch gekennzeichnet, daß** sie eine Dicke von 0,5 bis 500 μm, aufweist.

**13.** Folie gemäß einem oder mehreren der Ansprüche 1 bis 12, **dadurch gekennzeichnet, daß** sie dreischichtig ist und einen A - B - A - oder A - B - C - Aufbau (B = Kernschicht, A und C = Deckschichten) aufweist.

**14.** Folie gemäß einem oder mehreren der Ansprüche 1 bis 13, **dadurch gekennzeichnet, daß** Kern- oder Basisschicht und/oder Deckschicht(en) weitere übliche Additive, enthalten.

**15.** Folie gemäß einem oder mehreren der Ansprüche 1 bis 13, **dadurch gekennzeichnet, daß** sie thermofixiert ist.

**16.** Verfahren zur Herstellung der Folie gemäß einem oder mehreren der Ansprüche 1 bis 15, **dadurch gekennzeichnet, daß** aufgeschmolzenes Polyestermaterial durch eine Schlitzdüse extrudiert und als weitgehend amorphe Vorfolie auf einer Kühlwalze abgeschreckt, die Vorfolie anschließend erneut erhitzt und in Längs- und Querrichtung oder in Quer- und Längsrichtung oder in Längs-, in Quer- und nochmals und Längsrichtung und/oder Querrichtung verstreckt ("orientiert") und gegebenenfalls thermofixiert wird.

**17.** Verwendung der Folie gemäß einem oder mehreren der Ansprüche 1 bis 15 im industriellen Bereich, im Elektronikbereich, für Thermotransfer, als Verpackungsmaterial, als Magnetband-, Präge-, Trenn- oder Deckelfolie, als Kondensatorfolie, als Isoliermaterial, zum Kaschieren oder Laminieren.


**Claims**

**1.** A single- or multilayer, biaxially oriented film based on a crystallizable polyester and comprising at least one primary stabilizer for inhibiting oxidative degradation, wherein the crystallizable polyester has a standard viscosity (SV) in the range of from 450 to 830 and comprises from 100 to 10 000 ppm of primary stabilizer in covalently bonded form, which has at least two groups capable of polycondensation during polyester formation.

**2.** The film as claimed in claim 1, wherein the proportion of the covalently bonded stabilizer is from 150 to 9 000 ppm.

**3.** The film as claimed in claim 1 or 2, wherein the primary stabilizer is a constituent of the main polymer chain of the polyester.

**4.** The film as claimed in claim 1, wherein the primary stabilizer contains at least two carboxy groups and/or ester groups capable of polycondensation during polyester formation.

**5.** The film as claimed in one or more of claims 1 to 4, wherein the primary stabilizer is a sterically hindered phenol, a thiobisphenol, alkylidene-bisphenol, an acylaminophenol or an aromatic compound having 2 or more secondary amino groups.

**6.** The film as claimed in one or more of claims 1 to 5, which also comprises a secondary stabilizer.

**7.** The film as claimed in claim 6, wherein the secondary stabilizer is a thioether or zinc dibutyldithiocarbamate.

**8.** The film as claimed in claim 6 or 7, wherein the proportion of the secondary stabilizer is from 0.01 to 1.0% by weight based on the weight of the film.

**9.** The film as claimed in one of more of claims 1 to 8, wherein the SV of the polyester having the covalently bonded primary stabilizer is from 450 to 850.

**10.** The film as claimed in one or more of claims 1 to 9, wherein the melt resistivity of the polyester having the covalently bonded primary stabilizer is in the range from $1 \cdot 10^7$ to $120 \cdot 10^7$ ohm · cm.

**11.** The film as claimed in one or more of claims 1 to 10, wherein the polyester having the covalently bonded primary stabilizer is a modified polyethylene terephthalate, polybutylene terephthalate, poly(1,4-cyclohexanedimethylene terephthalate), polyethylene naphthalene-2,6-dicarboxylate, polyethylene naphthalene-1,5-dicarboxylate, polyethylene naphthalate/bibenzoate, or poly(ethylene p-hydroxybenzoate).

**12.** The film as claimed in one or more of claims 1 to 11, whose thickness is from 0.5 to 500 $\mu$m.

**13.** The film as claimed in one or more of claims 1 to 12, which has three layers and has an A - B - A structure or A - B - C structure (B = core layer, A and C = outer layers).

**14.** The film as claimed in one or more of claims 1 to 13, wherein core layer or base layer and/or outer layer(s) comprise other conventional additives.

**15.** The film as claimed in one or more of claims 1 to 13, which has been heat-set.

**16.** A process for producing the film as claimed in one or more of claims 1 to 15, which comprises extruding molten polyester materials through a slot die and quenching the same in the form of a substantially amorphous prefilm on a chill roll, and then reheating the prefilm and orienting it longitudinally and transversely, or transversely and longitudinally, or longitudinally, transversely, and again longitudinally and/or transversely, and, where appropriate, heat-setting the same.

**17.** The use of the film as claimed in one or more of claims 1 to 15 in industry, in electronics, for thermal transfer, or as a packaging material, as a magnetic tape film, stamping foil, release film, or lid film, as a capacitor film, as an insulating material, or for lamination.

**Revendications**

**1.** Feuille monocouche ou multicouche, orientée biaxialement, à base d'un polyester cristallisable, qui contient au moins un stabilisateur primaire pour empêcher une dégradation par oxydation, **caractérisée en ce que** le polyester cristallisable présente une viscosité standard (SV) dans la plage de 450 à 830 et contient 100 à 10.000 ppm de stabilisateur primaire sous une forme liée par covalence, le stabilisateur présentant au moins 2 groupements susceptibles de réagir par polycondensation lors de la formation du polyester.

**2.** Feuille selon la revendication 1, **caractérisée en ce que** la fraction du stabilisateur, qui est lié par covalence, est de 150 à 9000 ppm.

**3.** Feuille selon la revendication 1 ou 2, **caractérisée en ce que** le stabilisateur primaire représente un élément de la chaîne polymère principale du polyester.

**4.** Feuille selon la revendication 1, **caractérisée en ce que** le stabilisateur primaire présente au moins deux groupements carboxyle et/ou ester susceptibles de réagir par polycondensation lors de la formation du polyester.

**5.** Feuille selon l'une quelconque des revendications 1 à 4, **caractérisée en ce que** le stabilisateur primaire est un phénol à encombrement stérique, un thio-bis-phénol, un alkylidène-bis-phénol, un acyl-amino-phénol ou un composé aromatique ayant 2 ou plusieurs groupements amino secondaires.

**6.** Feuille selon l'une quelconque des revendications 1 à 5, **caractérisée en ce qu'**elle contient en outre un stabilisateur secondaire.

**7.** Feuille selon la revendication 6, **caractérisée en ce que** le stabilisateur secondaire est un thioéther ou un dibutyldithiocarbamate de zinc.

**8.** Feuille selon la revendication 6 ou 7, **caractérisée en ce que** la fraction du stabilisateur secondaire représente 0,01 à 1,0 % en poids par rapport au poids de la feuille.

**9.** Feuille selon l'une quelconque des revendications 1 à 8, **caractérisée en ce que** le polyester, auquel est relié par covalence le stabilisateur primaire, présente une valeur de SV de 450 à 850.

**EP 1 344 790 B1**

**10.** Feuille selon l'une quelconque des revendications 1 à 9, **caractérisée en ce que** la résistance spécifique de la masse fondue du polyester, auquel est relié par covalence le stabilisateur primaire, se situe dans une plage de $1\cdot10^7$ à $120\cdot10^7$ Ohm·cm.

**11.** Feuille selon l'une quelconque des revendications 1 à 10, **caractérisée en ce que** le polyester, auquel est relié par covalence le stabilisateur primaire, est un poly(téréphtalate d'éthylène), un poly(téréphtalate de butylène), un poly(téréphtalate de 1,4-cyclohexanediméthylène), un poly(naphtalène-2,6-dicarboxylate d'éthylène), un poly(naphtalène-1,5-dicarboxylate d'éthylène), un poly(naphtalate-bibenzoate d'éthylène) ou un poly(para-hydroxybenzoate d'éthylène) modifié.

**12.** Feuille selon l'une quelconque des revendications 1 à 11, **caractérisée en ce qu'**elle présente une épaisseur de 0,5 à 500 μm.

**13.** Feuille selon l'une quelconque des revendications 1 à 12, **caractérisée en ce qu'**elle se compose de trois couches et **en ce qu'**elle présente une structure de type A-B-A ou A-B-C (B = couche centrale, A et C = couches de recouvrement).

**14.** Feuille selon l'une quelconque des revendications 1 à 13, **caractérisée en ce que** la couche centrale ou de base et/ou la (les) couche(s) de recouvrement contiennent d'autres additifs courants.

**15.** Feuille selon l'une quelconque des revendications 1 à 13, **caractérisée en ce qu'**elle est thermofixée.

**16.** Procédé de fabrication d'une feuille selon l'une quelconque des revendications 1 à 15, **caractérisé en ce qu'**un matériau polyester fondu est extrudé à travers une filière à fente et est trempée sur un cylindre de refroidissement pour donner une première feuille largement amorphe, **en ce que** l'on chauffe à nouveau la première feuille et qu'on l'étire ("oriente") dans le sens longitudinal et transversal ou dans le sens transversal et longitudinal ou dans le sens longitudinal, dans le sens transversal, puis à nouveau dans le sens longitudinal et/ou transversal et, éventuellement, **en ce qu'**on la soumet à une thermofixation.

**17.** Utilisation de la feuille selon l'une quelconque des revendications 1 à 15 dans le domaine industriel, dans le domaine de l'électronique, pour effectuer un thermotransfert, comme matériau d'emballage, comme feuille de bande magnétique, feuille grainée, feuille intercalaire ou feuille de recouvrement, comme feuille de condensateur, comme matériau isolant et dans le cadre du contrecollage ou du laminage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 620245 B

- KR 200147779

**In der Beschreibung aufgeführte Nicht-Patentliteratur**

- **GÄCHTER ; MÜLLER.** Kunststoffadditive. Carl Hanser Verlag

- **DR. HANS ZWEIFEL.** Plastics Additive Handbook. *Monographie*